# EUROPEAN PATENT APPLICATION

(11) **EP 2 088 397 A1**
(43) Date of publication of application: **12.08.2009**
(21) Application number: 07828827.1
(22) Date of filing: 28.09.2007
(51) Int. Cl.: G01D 5/14

(54) **ROTATION ANGLE DETECTOR**

(30) Priority: 26.10.2006 JP 2006290733
(71) Applicant: The Furukawa Electric Co., Ltd., Chiyoda-ku Tokyo 100-8322 (JP)
(72) Inventor: ABE, Fumihiko, Tokyo 1008322 (JP); TANAKA, Kengo, Tokyo 1008322 (JP); JIN, Dongzhi, Tokyo 1008322 (JP)
(74) Representative: Kirschner, Klaus Dieter
(86) International application number: PCT/JP2007/069086
(87) International publication number: WO 2008/050581

(57) **Abstract**

A rotation angle detector (100) in which a magnetic sensor (120) is placed so as to measure the magnetic flux density in the direction of the rotation axis of a magnet (110). The magnet (110) is chamfered at its portion near the magnetic sensor (120) and this moderates the radial gradient of the magnetic flux at the position of the magnetic sensor (120). As a result, even if the magnet (110) radially moves due to radial play, a variation in the magnetic flux density at the position of the magnetic sensor (120) is less.

## Description

### Technical field

The present invention relates to a rotation angle detector for detecting a rotation angle of a rotation body, with arranging a magnetic sensor as non-contacting thereto.

### Background art

So far, regarding a rotation angle detector for detecting a rotation angle of a rotation body, there are known a variety thereof to be configured for detecting thereby an angle for the rotation body to be rotated corresponding to a magnetic sensor, with fixing a magnet having a north pole and a south pole to configure a magnetic circuit therein to be rotated as integral with the rotation body, and then by arranging the magnetic sensor in vicinity of the magnet for detecting a strength of a magnetism of such the magnet. And then for example, the same are made good use in a variety of fields, such as an engine for vehicle, a DC motor, or the like. Moreover, as the magnetic sensor to be used for the rotation angle detector, there is generally known a Hall element therefor.

As a conventional example regarding the rotation angle detector, there is disclosed in a patent document 1 for example. And, such the rotation angle detector as disclosed in the patent document 1 is shown in FIG. 10. Regarding a rotation angle detector 900 as shown in the same figure, a magnet 901 to be formed as a disk shape is supported by an axis of rotation 904, and then the same is configured as rotatable in a direction as shown therein with using a void arrow.

Moreover, a magnetic sensor 902 and a 903 are the Hall elements, that individually has a temperature characteristic as equivalent therebetween, and then that are arranged for an angle, which is formed with a line, which is connected between the magnetic sensor 902 and a center of the disk as an O, and with a line, which is connected between the magnetic sensor 903 and the center thereof as the O, to become approximately 90 degrees. Further, such the magnetic sensor 902 and the 903 are arranged at directly under a periphery of the magnet 901.

According to the rotation angle detector 900 to be configured in the above mentioned way, that is disclosed in the patent document 1, there are proposed that it becomes able to design a size for a whole of the sensor to be smaller comparing to the conventional, and that it becomes able to provide the rotation angle detector with having a stability as excellent regarding a performance thereof as well.
[Patent Document 1] Japanese Patent Application Publication No. 2003-075108

### Disclosure of the invention

### Problems to be solved by the invention

However, there are problems as described below according to the above mentioned conventional rotation angle detector. Here, a rotation body as an object for a measurement has an axial backlash that an axis of rotation moves as a little in a radial direction thereof, and then due to such the axial backlash, a magnet to be fixed at the rotation body cannot help but moves as a little either in the radial direction thereof for a magnetic sensor. Such the magnetic sensor is arranged at any surrounding position of a peripheral part as in vicinity thereof regarding the magnet. And, according to the patent document 1, the same is arranged at directly under the peripheral part thereof.

Moreover, a peripheral surface of the magnet is formed to be as a right angle to a top surface and to a bottom surface of the rotation body respectively. And then at a boundary part between the peripheral surface and the top surface, or the same and the bottom surface, that is to say, at a corner part thereof, a magnetic flux density of the magnet forms a rapid variation thereby. Hence, in a case where the magnet is shifted in a radial direction to the magnetic sensor according to a rotation thereof, a measured value of the magnetic flux density to be measured by using the magnetic sensor cannot help but become varied largely either. And then there becomes a problem, such as that an error of the measurement cannot help but become larger regarding a rotation angle thereof, or the like.

For minimizing such the above mentioned error of the measurement regarding the rotation angle thereof to become as little as possible, there is performed conventionally a measures for suppressing a backlash of the axis of rotation to become as little as possible. However, it is not able to delete completely the backlash of the axis of rotation in the radial direction thereof at all. As described above, because the magnetic flux density thereof varies rapidly at the corner part of the magnet, an influence to the magnetic flux density thereof is large even in a case of designing the backlash in the radial direction thereof to be as smaller. Hence, it is not able to design the error of the measurement regarding the rotation angle thereof to be as sufficiently smaller.

Here, the present invention is presented for solving such the above mentioned problems, and an object is to provide a rotation angle detector, by which it becomes able to suppress an error of measurement regarding a rotation angle due to an axial backlash in a radial direction thereof.

### Means for solving the problem

The first aspect regarding a rotation angle detector according to the present invention is **characterized in that** the rotation angle detector comprises: a magnet having at least a top surface, a bottom surface and a peripheral surface, that is fixed at a detectable rotation body and the same is rotated as integral therewith; a magnetic detecting unit for detecting a strength of a magnetism for the magnet, that is arranged at a peripheral corner part as in vicinity thereof to be formed with the top surface or the bottom surface and with the peripheral surface of the magnet; and an arithmetic processing unit for calculating a rotation angle of the detectable rotation body with using an output of the magnetic detecting unit; wherein a part to be formed by removing a part of the peripheral corner as all around thereof forms a connecting face to correspond between the top surface or the bottom surface and the peripheral surface, and the magnetic detecting unit is arranged at the connecting face as in vicinity thereof.

Another aspect regarding the rotation angle detector according to the present invention is **characterized in that** the peripheral surface is parallel to an axis of rotation regarding the magnet, and the peripheral surface is approximately vertical to the top surface and to the bottom surface, a peripheral line that corresponds to the peripheral surface regarding a cross section passing through the axis of rotation regarding the magnet is approximately vertical to a top line and to a bottom line that correspond to the top surface and bottom surface respectively, a connecting line that corresponds to the connecting face corresponds between the top line or the bottom line and the peripheral line.

Another aspect regarding the rotation angle detector according to the present invention is **characterized in that** the connecting face is comprised of a plane surface, a curved surface, or a multiple stage surface.

Another aspect regarding the rotation angle detector according to the present invention is **characterized in that** a detecting face of the magnetic detecting unit faces to the connecting face, the same is arranged in vertical direction to the axis of rotation, and the same detects a strength of a magnetism in a direction of the axis of rotation regarding the magnet.

Another aspect regarding the rotation angle detector according to the present invention is **characterized in that** an edge part at a side of the axis of rotation regarding the detecting face of the magnetic detecting unit is arranged for positioning at between one edge part of the connecting face and the other edge part thereof.

Another aspect regarding the rotation angle detector according to the present invention is **characterized in that** a rate of an area for the part to be removed from the peripheral corner part for an area of rectangular shape to be formed with the peripheral line, the top line and the bottom line regarding the cross section of the magnet passing through the axis of rotation is not lower than 5 % but not higher than 35 %.

Another aspect regarding the rotation angle detector according to the present invention is **characterized in that** a rate of an area for the part to be removed from the peripheral corner part for the area of rectangular shape to be formed with the peripheral line, the top line and the bottom line regarding the cross section of the magnet passing through the axis of rotation is not lower than 20 % but not higher than 30 %.

Another aspect regarding the rotation angle detector according to the present invention is **characterized in that** the magnet has an approximately round shape for at least a periphery thereof, and the same has the strength of the magnetism from the magnet with varying along a circumferential direction of the magnet.

### Effect of the invention

According to the rotation angle detector regarding the present invention, by chamfering the corner part of the magnet as in vicinity of the magnetic sensor therein, that is fixed at the detectable rotation body and the same is rotated as integral therewith, it becomes possible to measure the rotation angle thereof with a high accuracy even in a case where it becomes occurred an axial backlash in the radial direction of the rotation body.

### Brief description of the drawings

FIG. 1 is a block diagram showing a configuration of a rotation angle detector regarding the first embodiment according to the present invention.
FIG. 2 is a block diagram showing a configuration of a magnetic sensor with using a Hall element.
FIG. 3 is a diagram showing a magnetic flux density to be formed due to a magnet, and a variation of the magnetic flux density due to a movement of the magnet in a radial direction thereof.
FIG. 4 is a block diagram showing a configuration of a rotation angle detector regarding the second embodiment according to the present invention.
FIG. 5 is a graph showing a relation between a rotation angle of a magnet and an output of a magnetic sensor.
FIG. 6 is a graph showing a relation between a distance of a movement regarding a magnet in a radial direction thereof and
a magnetic flux density, with corresponding to each degree of magnitude regarding a chamfered part thereof respectively.
FIG. 7 is a graph showing a relation between a degree of magnitude for an area to be removed regarding a chamfered part and an error of rotation angle and also a magnetic flux density regarding a magnetic sensor.
FIG. 8 is a graph showing a relation between a degree of magnitude for an area to be removed and an amplification factor of an amplifier and also an error of angle.
FIG. 9 is a block diagram showing a configuration of a rotation angle detector regarding the third embodiment according to the present invention.

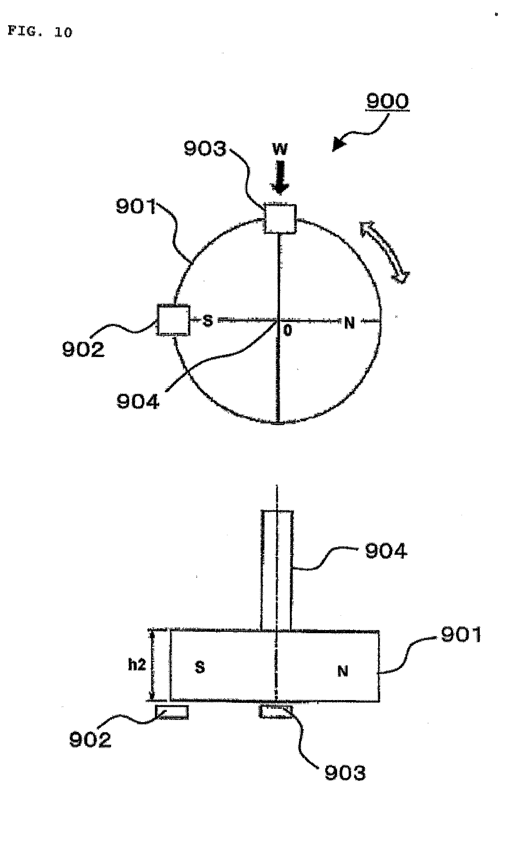

FIG. 10 is a block diagram showing a configuration of a rotation angle detector as conventional.

### Description of the reference symbols

- 100, 200, 300, 900: ROTATION ANGLE DETECTOR
- 110, 310, 901, 910: MAGNET
- 111, 311: PERIPHERAL SURFACE
- 112: TOP SURFACE
- 113: BOTTOM SURFACE
- 114, 314: CHAMFERED PART (CONNECTING FACE)
- 120, 220, 902, 903, 911: MAGNETIC SENSOR
- 121: HALL ELEMENT
- 122: CONSTANT ELECTRIC CURRENT
- 123: AMPLIFIER
- 131, 132: LINE OF MAGNETIC FORCE
- 240, 315: AREA OF CROSS SECTION
- 904: AXIS OF ROTATION

### Best mode for carrying out the invention

A rotation angle detector regarding a preferred embodiment according to the present invention will be described in detail below, with reference to the drawings. Here, each of component parts having a similar function is designated by using the similar symbol for simplifying a drawing and a description thereof.

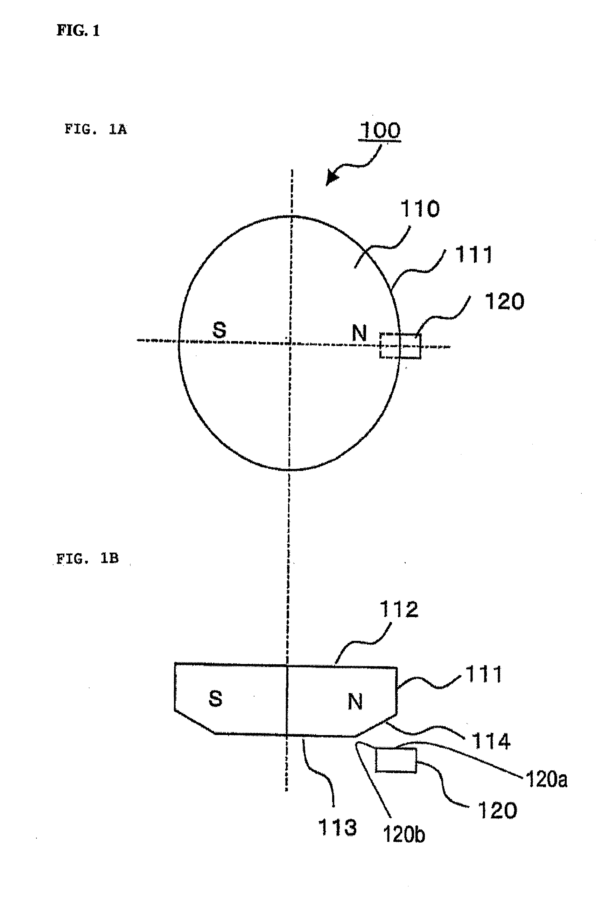

The rotation angle detector as the first embodiment according to the present invention will be described in detail below, with using FIG. 1. FIG. 1 is a structural drawing showing a rotation angle detector 100 according to the present embodiment, wherein 1 (a) shows a plan view in a vertical direction to an axis of rotation thereof and 1 (b) shows a cross sectional view from a point of view as a plane passing through the axis of rotation thereof respectively. Moreover, such the rotation angle detector 100 comprises a magnet 110 of cylindrical shape to be fixed at a rotation body (not shown in the figure), and a magnetic sensor 120 to be fixed at directly under a peripheral surface 111 of the magnet 110 as non-contacting whereto.

Further, the magnet 110 is magnetized in a radial direction thereof, and then either one side in the radial direction thereof is designed to be as a north pole and the other side thereof is designed to be as a south pole. Still further, it is able to design a thickness of the magnet to be as approximately 3 mm for example, as it is necessary for the same to be ensured as a certain degree of amount, for obtaining a strength of a magnetic field so as to be able to measure by using a magnetic sensor 120 regarding a variation of magnetic flux density due to a rotation of the magnet 110. Still further, a position of the magnetic sensor 120 is designed to be at directly under the peripheral surface 111 of the magnet 110 in FIG. 1, however, it is not limited thereto, and the same may be arranged at right above the peripheral surface 111 for example.

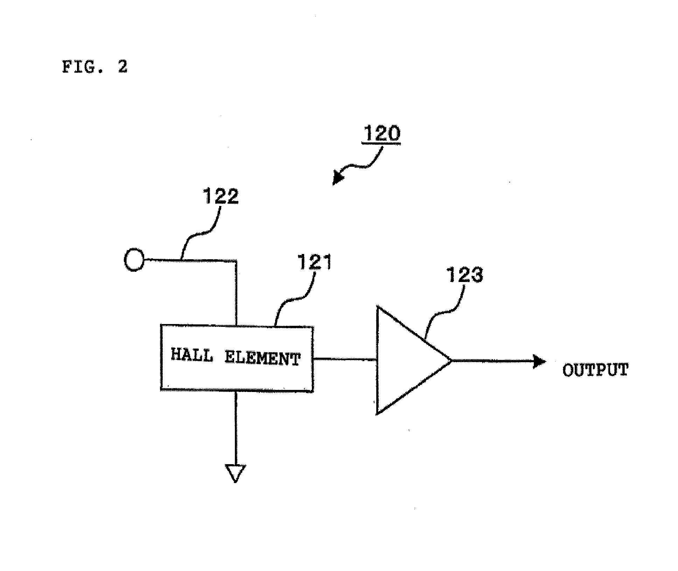

Still further, as the magnetic sensor 120, it is able to make use of a Hall element for example. Such the Hall element is a magnetic sensor with making use of a Hall effect of a semiconductor, and then it is able for the same to convert directly from a magnetism to an electricity. As shown in FIG. 2, in a case where a magnetic field is applied to a Hall element 121 under a state where a constant electric current 122 is flowed through the Hall element 121, a Hall voltage is generated at the Hall element 121. Still further, such the voltage is amplified by using an amplifier 123, and then the same is designed to be as an output of the magnetic sensor 120.

Still further, the magnet 110 of cylindrical shape comprises a top surface 112, a bottom surface 113 and the peripheral surface 111 as sterically. And then a part of a peripheral corner part to be formed with the top surface 112 or the bottom surface 113 and with the peripheral surface 111, as the part to be formed by removing all around thereof, forms a connecting face 114 to correspond between the top surface 112 or the bottom surface 113 and the peripheral surface 111.
Still further, such the peripheral surface 111 is parallel to the axis of rotation regarding the magnet, and also the peripheral surface 111 is approximately vertical to the top surface 112 and to the bottom surface 113 respectively. From a point of view as planar, as shown in FIG. 1(b), a peripheral line 111, which corresponds to the peripheral surface 111, is approximately vertical to a top line 112 and to a bottom line 113, that correspond to the top surface 112 and the bottom surface 113 respectively, and then a connecting line 114, which corresponds to the connecting face, corresponds between the peripheral line 111 and the top line 112, or between the same and the bottom line 113. Still further, the peripheral surface or the peripheral line is designated with using the 111, the top surface or the top line is designated with using the 112, and the bottom surface or the bottom line is designated with using the 113, hereinafter respectively.

That is to say, the rotation angle detector 100 according to the present embodiment is **characterized in that** a chamfered part (that is to say, the connecting face) 114 is designed to be formed, at which the peripheral corner part, which is formed with the peripheral surface 111 and with the bottom surface 113 regarding the magnet 110, is cut away therefrom. Still further, according to the present embodiment, the chamfered part 114 is designed to be formed at such the peripheral corner part to be formed with the peripheral surface 111 and with the bottom surface 113, because the magnetic sensor 120 is designed to be arranged at a side of the bottom surface 113. On the contrary, in a case where the magnetic sensor 120 is designed to be arranged at a side of the top surface 112, the chamfered part 114 is designed to be formed at the peripheral corner part to be formed with the peripheral surface 111 and with the top surface 112.

Still further, according to the present embodiment, the magnetic sensor 120 is designed to be arranged for measuring a magnetic flux density in a direction of an axis of rotation regarding the magnet 110. Still further, regarding a detecting face 120a of such the magnetic sensor 120, a part thereof is at directly under the chamfered part 114, and then a remained part is arranged to be as at an outer side from the peripheral surface 111. Still further, regarding a position of an arrangement for the magnetic sensor 120 in the radial direction thereof, it is desirable to determine for an edge part 120b at a side of the axis of rotation regarding the detecting face 120a to be as an outer side of a point of intersection between the chamfered part (connecting face) 114 and the bottom surface 113, and to be as an inner side from the peripheral surface 111 as well. That is to say, it is desirable to determine the position for the magnetic sensor 120 in the radial direction thereof, for at least the edge part 120b at the axis of rotation thereof regarding the detecting face 120a to be positioned at directly under the chamfered part 114.

Still further, a shape of the chamfered part 114 as shown in FIG. 1 is designed to be as a C-chamfering of a planar shape for a cut surface thereof. However, it is not limited thereto, and it is also possible therefor to be as an R-chamfering of a curved surface shape, or to be as a chamfering of a multiple stage surface shape as well. Furthermore, regarding a degree of magnitude for the chamfered part 114, it is possible to select properly within a predetermined range thereof as described below. In any case thereof, it is desirable to determine for being able to measure preferably the magnetic flux density in the direction of the axis of rotation regarding the magnet 110 by using the magnetic sensor 120.

As described above, by chamfering the corner part of the magnet 110 at the position as in vicinity of the magnetic sensor 120, it becomes able to design a gradient in the radial direction thereof for the magnetic flux density at the position of the magnetic sensor 120 to become gradual. That is to say, it becomes able to design a variation of the magnetic flux density at the position of the magnetic sensor 120 to become smaller, even in a case where the magnet 110 is moved due to the backlash thereof in the radial direction thereof.

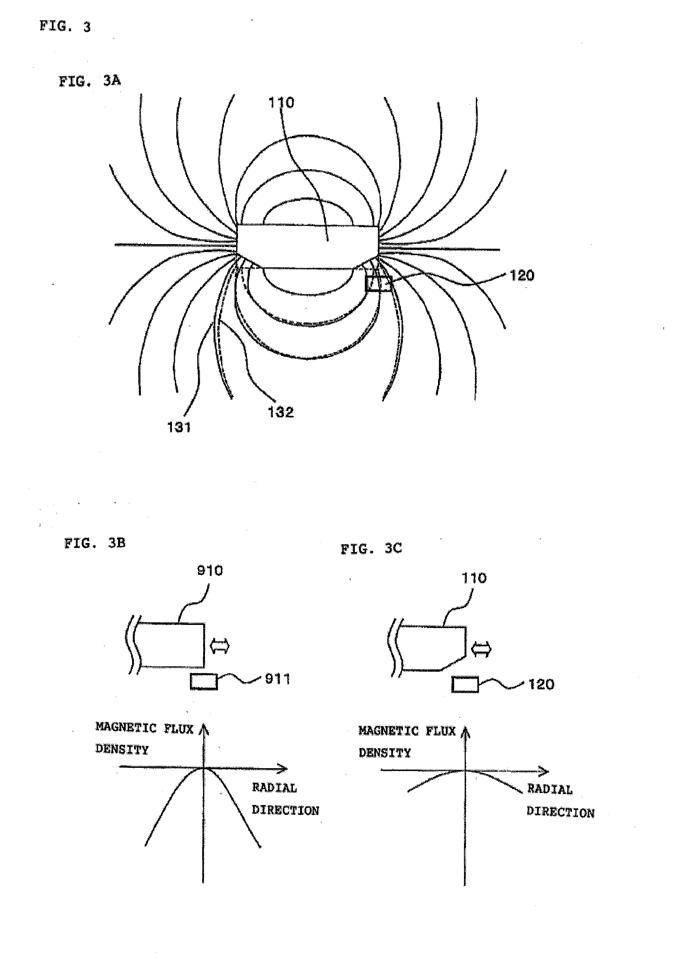

Next, FIG. 3(a) is a diagram exemplary showing a magnetic flux density to be formed due to a magnet 110. According to FIG. 3 (a), a line of magnetic force 131 as designated with using a solid line shows that is formed due to the magnet 110 having the chamfered part 114 according to the present embodiment, meanwhile, a line of magnetic force 132 as designated with using a dashed line shows that is formed due to the conventional magnet of cylindrical shape which does not have any chamfered part at all. Moreover, at a position of the magnetic sensor 120, a pitch of the line of magnetic force 131 to be formed due to the magnet 110 having the chamfered part 114 becomes to be wider than a pitch of the line of magnetic force 132 to be formed due to the conventional magnet which does not have any chamfered part at all, and this indicates that a variation of the magnetic flux density in the radial direction thereof becomes to be gradual at the position of the magnetic sensor 120 because of forming such the chamfered part 114.

Further, a variation of the magnetic flux density in the axis of rotation thereof at the magnetic sensor 120 is shown in FIG. 3(b) and 3(c) as how to vary due to the backlash of the magnet 110 in the radial direction thereof. Here, FIG. 3 (b) shows a case of a conventional magnet 910 which does not have any chamfered part at all, on the contrary, FIG. 3 (c) shows the case of the magnet 110 according to the present embodiment.

Still further, in a case of the conventional magnet 910, at a time of an movement of the magnet 910 in the radial direction thereof, the magnetic flux density thereof at a position of a magnetic sensor 911 becomes to be varied rapidly. On the contrary, in the case of the magnet 110 according to the present embodiment, a variation of the magnetic flux density thereof at the position of the magnetic sensor 120 becomes to be extremely smaller because of forming the chamfered part 114. This indicates that it becomes able to form the magnet 110 for the magnetic flux density thereof to be varied as gradually in the radial direction thereof by forming such the chamfered part 114.

As described above, according to the rotation angle detector 100 regarding the present embodiment, it becomes possible to design for the magnetic flux density thereof, which is measured by using the magnetic sensor 120, and the same is varied due to the backlash in the radial direction of the magnet 110, however, to become to have such the variation as extremely smaller than conventional. Thus, it becomes possible to design thereby the error of the measurement regarding the rotation angle thereof to be smaller and then to enhance the accuracy therefor, even in a case where the magnet 110 becomes to be rotated with having a backlash in the radial direction thereof.

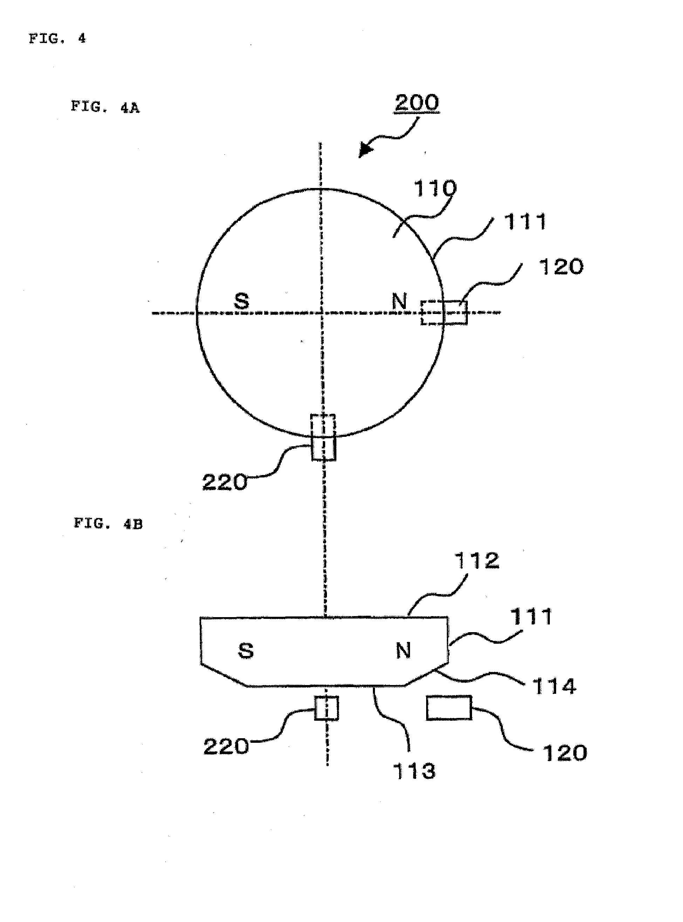

Next, another rotation angle detector as the second embodiment according to the present invention will be described in detail below, with using FIG. 4. FIG. 4 is a structural drawing showing a rotation angle detector 200 according to the present embodiment, wherein 4 (a) shows a plan view in a vertical direction to an axis of rotation thereof and 4(b) shows a cross sectional view from a point of view as a plane passing through the axis of rotation thereof respectively. Moreover, according to the present embodiment, there is added another magnetic sensor 220 in addition to the magnetic sensor 120.

That is to say, such the rotation angle detector 200 according to the present embodiment is designed to be configured for enhancing the accuracy of the measurement regarding the rotation angle thereof by using two of the 120 and the 220 as the magnetic sensors. Further, the magnetic sensor 220 is designed to be arranged in a direction that is rotated as 90 degrees in a circumferential direction for the magnetic sensor 120. Still further, the same is designed to be arranged as similar to that for the magnetic sensor 120 regarding a direction of an axis of rotation thereof and a radial direction thereof. Therefore, a relationship of a relative position for between such the magnetic sensor 220 and the chamfered part 114 becomes to be similar to the case of the magnetic sensor 120 as well. And then a variation of the magnetic flux density thereof at a position of the magnetic sensor 220 due to the backlash of the magnet 110 in the radial direction thereof becomes to be gradual as similar to that according to the magnetic sensor 120.

Still further, the magnet 110 is designed to be magnetized in the radial direction thereof, and then a distribution of the magnetic flux density thereof in the circumferential direction thereof is designed to be configured for becoming a sine wave approximately. Furthermore, it becomes able to estimate approximately that an output of the magnetic sensor 220 is equal to sin θ and an output of the magnetic sensor 120 is equal to cos θ (the θ: a rotation angle thereof), because each of the arrangements of the magnetic sensor 220 and of the magnetic sensor 120 is shifted as 90 degrees therebetween in the circumferential direction thereof.

Thus, according to the rotation angle detector 200, it is designed to be configured for being able to calculate an angle as that is equal to arctan (the output of the magnetic sensor 220 / the output of the magnetic sensor 120), within a range of the rotation angle as 360 degrees, with a further higher accuracy therefor by using two of the magnetic sensor 120 and the 220. And then one example of a result form such the measurement will be described in detail below. Here, as a conventional magnet for an object to be compared thereto, the magnet 910 having the cross section of rectangular shape as shown in FIG. 3 (b) is used in the following description.

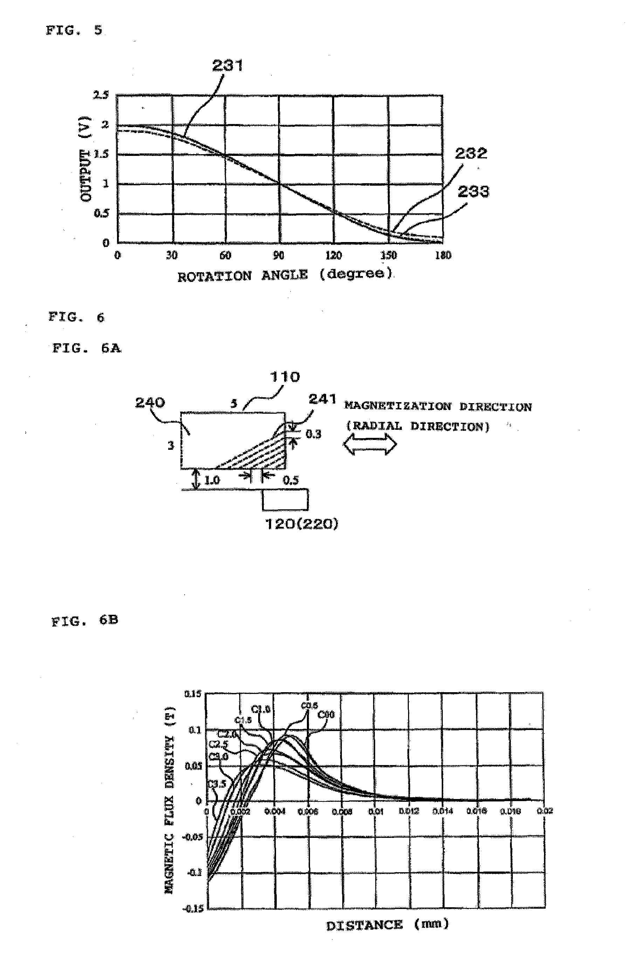

A relation between the output of the magnetic sensor 120 (or the 220) and a rotation angle of the magnet 110 is shown in FIG. 5. According to the same figure, a solid line 231 shows a relation between the rotation angle of the magnet 110 and the output of the magnetic sensor 120 in a case where the magnet 110 is rotated without having any backlash in the radial direction thereof at all. In such the case thereof, according to the magnet 110 as rotating from zero degree to 180 degrees, the output of the magnetic sensor 120 becomes to be varied from zero volt to two volts.

On the contrary, in a case where the conventional magnet 910 is rotated with having a backlash in the radial direction thereof, which does not have any chamfered part at all, as shown by using a dashed line 232 therein, the output of the magnetic sensor 911 at a time of the rotation angle as zero degree becomes to be smaller than that according to the solid line 231, meanwhile, the same becomes to be larger at a time of 180 degrees on the contrary thereto. Thus, according to such the conventional magnet 910, which does not have any chamfered part, the output of the magnetic sensor 911 becomes to be varied largely even in a case where the same is shifted in the radial direction thereof due to the backlash in the radial direction thereof. An then the output as the dashed line 232 of the magnetic sensor 911 cannot help but become to be shifted as relatively largely from the solid line 231, which does not have any backlash at all. Hence, the error of the rotation angle cannot help but become to be increased if the rotation angle cannot help but be determined with reference to such the solid line 231, which does not have any backlash at all.

Moreover, in a case where the magnet 110 according to the present embodiment, which has the chamfered part 114, is rotated with having a backlash in the radial direction thereof, the output of the magnetic sensor 120 becomes to be varied as a chain line 233. Such the chain line is overlapped with the solid line 231 at almost all the parts therebetween, and then it becomes clear that an influence due to the backlash in the radial direction thereof becomes to be almost dissolved. That is to say, it becomes clear that it becomes able to design for the shift from the output 231, which does not have any backlash at all, to become sufficiently smaller, due to the variation of the output from the magnetic sensor 120 as to be smaller even in a case where the magnet 110 becomes to be shifted in the radial direction thereof, because such the magnet 110 has the chamfered part 114 according to the present embodiment.

Thus, according to the magnet 110 regarding the present embodiment, the variation of the magnetic flux density in the radial direction thereof is designed to become smaller at the position of the magnetic sensor 120, because the chamfered part 114 is provided by chamfering the corner thereof in vicinity of the magnetic sensor 120, as similar to that according to the first embodiment. As a result, it becomes able to reduce extremely the influence due to the backlash in the radial direction thereof, which influences to the relation between the rotation angle thereof and the output of the magnetic sensor 120, as shown in FIG. 5. Furthermore, there is described regarding the magnetic sensor 120 in the above description, meanwhile, regarding the magnetic sensor 220, it becomes able to obtain an improvement and an advantage as shown in FIG. 5, which is similar to that according to the magnetic sensor 120.

Next, a relation between a degree of magnitude regarding the chamfered part 114 and an error of the rotation angle will be described in detail below. As one example, a result that is evaluated by a simulation regarding an effect to be given by the chamfered part 114 is shown in FIG. 6. Here, as shown in FIG. 6 (a), there is performed the simulation in a case where a rate of an area to be chamfered (referred to as an area to be removed hereinafter) for an area of cross section regarding the north pole or the south pole of the magnet 110 is changed. Moreover, the magnetic sensor 120 (and the 220) is arranged at a position as a lower part of 1 m from a corner of a right side below of the magnet 110. Further, the magnetic sensor 120 (and the 220) is designed to become measuring a magnetic flux in an upper and lower direction regarding such the figure.

Still further, regarding FIG. 6 (a), there is designed to perform a chamfering as like a dashed line 241 in a parallel direction to a diagonal line of a cross section 240. And then there is shown in FIG. 6(b) regarding a magnetic flux density at the position of the magnetic sensor 120 (and the magnetic sensor 220) in a case of increasing the area to be removed as every one tenth of a length of each side for the two sides regarding the cross section 240 in vicinity of the magnetic sensor 120 (and the magnetic sensor 220), wherein a horizontal axis therein designates a distance of which the magnet 110 is moved in the radial direction thereof.

Still further, regarding FIG. 6, there is designed for a degree of magnitude regarding the cross section 240 to be as 5 mm for the wider side thereof and 3 mm for the narrower side thereof. Still further, as the degree of magnitude regarding the chamfered part, every 0.5 mm for the wider side thereof till 3.5 mm and every 0.3 mm for the narrower side thereof till 2.1 mm are increased step by step respectively, and then each of cases regarding the simulation is shown as designated therein with using C00 to C3.5 respectively.

Still further, according to FIG. 6 (b), it becomes clear that a peak part of the magnetic flux density becomes to be gentle as increasing the chamfered part from the C00, which designates that there is not any chamfered par at all. That is to say, it shows that as increasing the area to be removed regarding the chamfered part 114, the variation for the movement of the magnet 110 in the radial direction thereof becomes to be smaller. Furthermore, it becomes necessary to enhance an amplification factor of the amplifier 123, because a value of the peak becomes decreased as becoming the peak part of the magnetic flux density to be gentle.

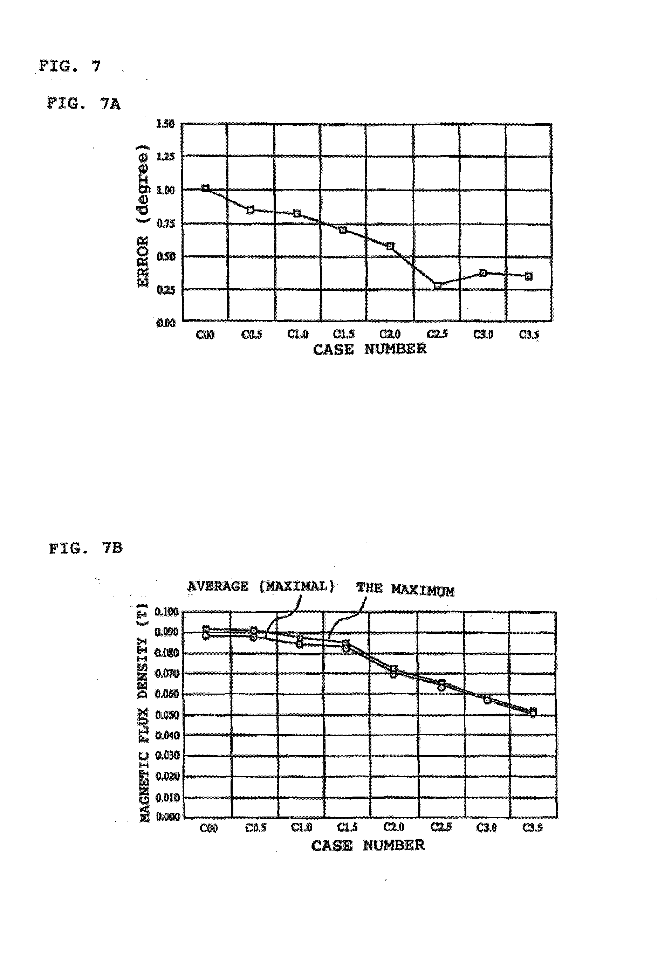

Next, according to the above mentioned simulation therefor, there is shown in FIG. 7(a) regarding a relation between a degree of magnitude for an area to be removed regarding the chamfered part 114 and an error of rotation angle, that is measured by using the magnetic sensor 120 and the 220 and then that an arithmetic processing is performed therefor. Moreover, there is shown in FIG. 7(b) regarding a relation between a degree of magnitude for the area to be removed and a magnetic flux density at the individual positions regarding the magnetic sensor 120 and the 220 respectively. Here, according to FIG. 7 (a), it becomes clear that the error of the rotation angle becomes to be smaller as increasing the area to be removed regarding the chamfered part 114. Still further, according to the same figure, it becomes clear that the error has the minimum in a case of the C2.5 for the degree of magnitude regarding the area to be removed, and that such the error does not become to be decreased even in a case of increasing such the area to be removed further than the value thereof.

According to the relation between the degree of magnitude for the area to be removed regarding the chamfered part 114 and the magnetic flux density thereat as shown in FIG. 7 (b), there is shown that the magnetic flux density thereof becomes to be decreased as increasing the area to be removed. According to the same figure, there is shown a magnetic flux density at the maximum and an average magnetic flux density in a case of changing the distance of the movement due to the backlash in the radial direction thereof, wherein the magnetic flux density at the maximum becomes to be close to the average magnetic flux density as increasing the area to be removed as well. And this is because the peak of the magnetic flux density becomes to be decreased as shown in FIG. 6 (b).

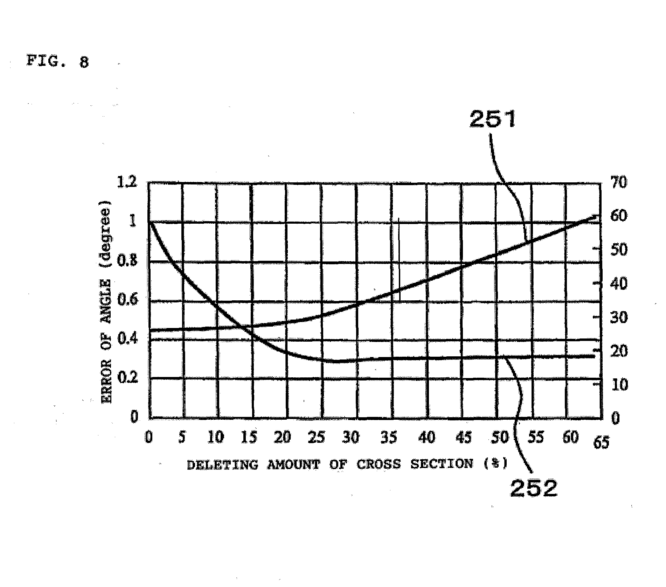

Moreover, as described above, the magnetic flux density thereof becomes to be decreased as increasing the area to be removed regarding the chamfered part 114, and then it becomes necessary to enhance thereby the amplification factor of the amplifier 123 for matching therewith. Here, a relation between a degree of magnitude for the area to be removed and an amplification factor of the amplifier 123 and also an error of an angle is shown in FIG. 8. According to the same figure, a horizontal axis therein is designated with using a rate (%)of the area to be removed, which is formed by chamfering, for the whole area of cross section (the area corresponding to the C00 as there is not any chamfered part at all). Further, it becomes necessary for the amplification factor of the amplifier 123 to become enhanced as increasing the area to be removed, which is formed by chamfering, such as shown by a graph 251 therein. And then the error of the measurement regarding the rotation angle becomes to be as a graph 252 in a case where the amplification factor thereof is set in such a way.

According to FIG. 8, it becomes clear that the error of the angle becomes to have the minimum in a case where the area to be removed regarding the chamfered part 114 is designed to be as approximately 25 %. Still further, it is desirable for the area to be removed regarding the chamfered part 114 to be designed as between 5 % and 35 % for the area of cross section regarding the north pole (and the south pole) before performing the chamfering therefor, and it is further preferable therefor to be performed the chamfering as between 20 % and 30 % thereof. Still further, regarding the above mentioned shape for the chamfering thereof, it is desirable for the cross section of such the magnet to become an approximately rectangular thereby.

Still further, as shown in FIG. 8, according to the rotation angle detector 200, which comprises the magnetic sensor 120 and the 220, it becomes possible to design the error of the measurement for the rotation angle regarding the magnet 110 to be as not wider than 0.3 degrees, in a case where the area to be removed regarding the chamfered part 114 is assumed to be as 25 % with using a ratio for the area of cross section for example. Still further, it becomes clear that there is the error as approximately one degree in a case where there is not any chamfered part at all, on the contrary, that it becomes able to improve extremely the accuracy of the measurement by providing the chamfered part 114. Furthermore, according to the present embodiment, it is designed to make use of the magnetic sensors as two pieces, however, it is not limited thereto, and it is possible to make use thereof as not less than three pieces as well for example.

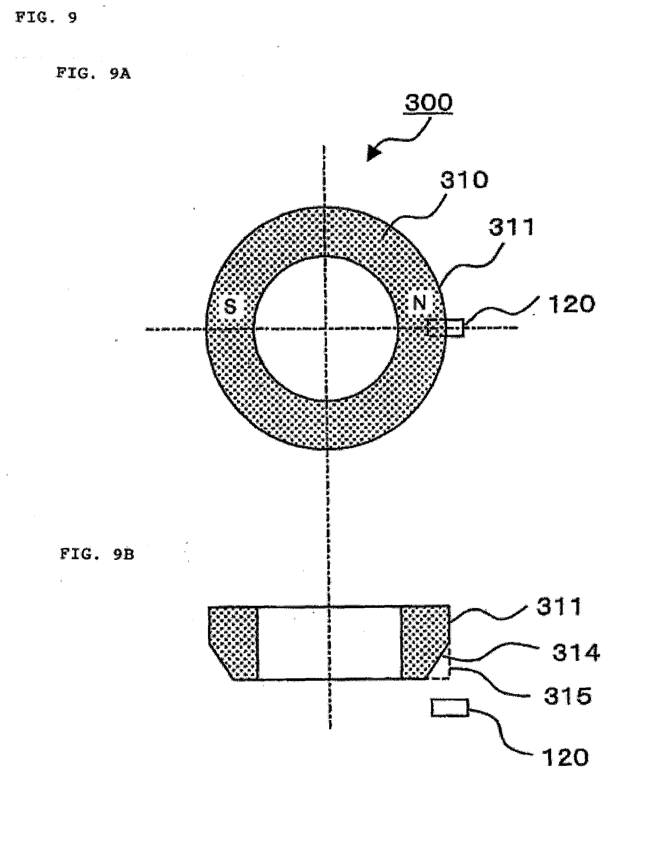

Next, another rotation angle detector as the third embodiment according to the present invention will be described in detail below, with using FIG. 9. FIG. 9 is a structural drawing showing a rotation angle detector 300 according to the present embodiment, wherein 9 (a) shows a plan view in a vertical direction to an axis of rotation thereof and 9 (b) shows a cross sectional view from a point of view as a plane passing through the axis of rotation thereof respectively. Moreover, a magnet 310 according to the present embodiment is formed only at a marginal part thereof, except a central part including the axis of rotation thereof.

Further, in a case where the magnet 310 is formed only at the marginal part thereof as described above, it is desirable to determine a degree of magnitude regarding a chamfered part 314 with a preferred rate for an area of cross section 315 before performing the chamfering for the magnet 310 as shown in FIG. 9 (b). Still further, it is desirable for the preferred degree of magnitude regarding the chamfered part 314 to be as between 5 % and 35 %, and it is further preferable therefor to be as between 20 % and 30 %, as similar to that according to the second embodiment.

Furthermore, in a case where a size of a magnet is designed to be smaller by providing the magnet 310 only at the marginal part thereof, that is fixed at a rotation body, such as according to the rotation angle detector 300 regarding the present embodiment, it becomes possible to measure a rotation angle with a high accuracy regarding the magnet 310, by providing the chamfered part 314 in a preferred way as described above.

Here, according to the present invention, it is desirable for a magnet to have an approximately round shape for at least a periphery thereof, and for such the above mentioned magnet to have a strength of a magnetism with varying along a circumferential direction of the above mentioned magnet as well.

Furthermore, the description regarding each of the above mentioned embodiments is individually described for each example of the rotation angle detector according to the present invention respectively, and it is not limited thereto either. Regarding a detailed configuration, a detailed operation, or the like, according to the rotation angle detector regarding each of the above described embodiments, it is possible to modify properly within a scope that is not departing from the subject of the present invention as well.

## Claims

1. A rotation angle detector, comprising:
a magnet having at least a top surface, a bottom surface and a peripheral surface, that is fixed at a detectable rotation body and the same is rotated as integral therewith;
a magnetic detecting unit for detecting a strength of a magnetism for the magnet, that is arranged at a peripheral corner part as in vicinity thereof to be formed with the top surface or the bottom surface and with the peripheral surface of the magnet; and
an arithmetic processing unit for calculating a rotation angle of the detectable rotation body with using an output of the magnetic detecting unit;
wherein a part to be formed by removing a part of the peripheral corner part as all around thereof forms a connecting face to correspond between the top surface or the bottom surface and the peripheral surface, and the magnetic detecting unit is arranged at the connecting face as in vicinity thereof.

2. The rotation angle detector as defined in claim 1,
wherein the peripheral surface is parallel to an axis of rotation regarding the magnet, and the peripheral surface is approximately vertical to the top surface and to the bottom surface, a peripheral line that corresponds to the peripheral surface regarding a cross section passing through the axis of rotation regarding the magnet is approximately vertical to a top line and to a bottom line that correspond to the top surface and bottom surface respectively, a connecting line that corresponds to the connecting face corresponds between the top line or the bottom line and the peripheral line.

3. The rotation angle detector as defined in claim 1 or 2,
wherein the connecting face is comprised of a plane surface, a curved surface, or a multiple stage surface.

4. The rotation angle detector as defined in any one of claims 1 to 3,
wherein a detecting face of the magnetic detecting unit faces to the connecting face with a detecting face thereof, the same is arranged in vertical direction to the axis of rotation, and the same detects a strength of a magnetism in a direction of the axis of rotation regarding the magnet.

5. The rotation angle detector as defined in any one of claims 1 to 4,
wherein an edge part at a side of the axis of rotation regarding the detecting face of the magnetic detecting unit is arranged for positioning at between one edge part of the connecting face and the other edge part thereof.

6. The rotation angle detector as defined in any one of claims 1 to 5,
wherein a rate of an area for the part to be removed from the peripheral corner part for an area of rectangular shape to be formed with the peripheral line, the top line and the bottom line regarding the cross section of the magnet passing through the axis of rotation is not lower than 5 % but not higher than 35 %.

7. The rotation angle detector as defined in claim 6,
wherein a rate of an area for the part to be removed from the peripheral corner part for the area of rectangular shape to be formed with the peripheral line, the top line and the bottom line regarding the cross section of the magnet passing through the axis of rotation is not lower than 20 % but not higher than 30 %.

8. The rotation angle detector as defined in any one of claims 1 to 7,
wherein the magnet has an approximately round shape for at least a periphery thereof, and the same has the strength of the magnetism from the magnet with varying along a circumferential direction of the magnet.
